(19) Europäisches Patentamt
European Patent Office
Office européen des brevets

(11) **EP 3 346 037 B1**

(12) **EUROPEAN PATENT SPECIFICATION**

(45) Date of publication and mention
of the grant of the patent:
**08.04.2020 Bulletin 2020/15**

(51) Int Cl.:
***D04H 3/033*** *(2012.01)* ***D04H 3/14*** *(2012.01)*

(21) Application number: **16842006.5**

(22) Date of filing: **02.09.2016**

(86) International application number:
**PCT/JP2016/075803**

(87) International publication number:
**WO 2017/038977 (09.03.2017 Gazette 2017/10)**

(54) **SPUNBOND NONWOVEN FABRIC MANUFACTURING METHOD AND MANUFACTURING DEVICE**

SPINNVLIESGEWEBEHERSTELLUNGSVERFAHREN UND -HERSTELLUNGSVORRICHTUNG

PROCÉDÉ DE FABRICATION ET DISPOSITIF DE FABRICATION DE NON-TISSÉ FILÉ-LIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.09.2015 JP 2015173606**

(43) Date of publication of application:
**11.07.2018 Bulletin 2018/28**

(73) Proprietor: **Toray Industries, Inc.**
**Tokyo 103-8666 (JP)**

(72) Inventors:
• **SHIMADA Daiki**
**Otsu-shi**
**Shiga 520-8558 (JP)**
• **HANE Ryoichi**
**Otsu-shi**
**Shiga 520-8558 (JP)**
• **SHINWASHI Hiroshi**
**Otsu-shi**
**Shiga 520-8558 (JP)**
• **INOUE Shinji**
**Otsu-shi**
**Shiga 520-8558 (JP)**

(74) Representative: **Mewburn Ellis LLP**
**City Tower**
**40 Basinghall Street**
**London EC2V 5DE (GB)**

(56) References cited:
JP-A- H1 025 650        JP-A- S5 259 775
JP-A- H07 268 720       JP-A- H08 226 063
JP-A- H09 228 223       JP-A- 2001 207 368
US-A- 5 487 655         US-A1- 2008 256 757
US-A1- 2008 317 895     US-B1- 6 379 136

**Description**

Technical Field

The present invention relates to a process for producing a spunbonded nonwoven fabric having excellent evenness. The present invention further relates to an apparatus for producing a spunbonded nonwoven fabric, with which such spunbonded nonwoven fabric can be produced by the production process.

Background Art

Spunbonded nonwoven fabrics are extensively utilized in applications including sanitary materials, filters, civil engineering materials, building materials, agricultural materials, vehicular materials, and household materials. Whichever application the spunbonded nonwoven fabrics are to be used, the required properties are becoming higher year by year and higher quality has come to be required. Although nonwoven fabrics formed by a paper-making nonwoven fabrics, films or the like have hitherto been used, these are recently used in a wider range of applications including fields involving higher precision. The spunbonded nonwoven fabrics are required to have higher evenness.

Meanwhile, one feature required for the production of a spunbonded nonwoven fabric is high production efficiency, which is attained by a continuous process ranging from forming fibers from a resin as a raw material to forming a nonwoven fabric therefrom. However, increasing the rate of producing spunbonded nonwoven fabric generally results in troubles such as enhanced unevenness in basis weight, and there is a tendency that production efficiency is inversely proportional to evenness. An important problem to be solved in the production of spunbonded nonwoven fabric is how to attain both production efficiency and evenness.

A process for improving the evenness of a spunbonded nonwoven fabric while maintaining such high production efficiency has been proposed, the process being a process for producing a nonwoven fabric having an unevenness in basis weight of 2.8 or less in terms of standard deviation of luminance $\delta$ by passing a continuous fiber group between a knife-shaped applying electrode and an earthed electrode disposed opposite the applying electrode and then drawing the continuous fiber group at a high speed with an air sucker (see Patent Document 1).

A process intended for obtaining a nonwoven fabric having excellent evenness in filament dispersion has been proposed. In this process for producing such nonwoven fabric, at least a part of continuous fiber groups sent out from an air sucker is allowed to collide with a collision material and the continuous fiber group is then allowed to fall while being rocked by high-speed air streams in a position downstream from the collision point, thereby forming a web (see Patent Document 2).

An apparatus for producing nonwoven fabrics which is intended to be capable of stably producing a long-fiber nonwoven fabric having excellent fibrous-web evenness has been proposed. This apparatus includes an air sucker having an outlet connected to a skirt for spreading a continuous fiber group, and further includes baffle plates disposed on a lower part of the outer surface of the skirt and serving to regulate secondary air streams flowing in along the outer surface (see Patent Document 3).

An apparatus for producing nonwoven fabrics which has a lip capable of carrying out continued minute change of shape in the long side direction of a jetting port is provided in a rectangular jetting port part in the lower part of the high-speed stream drawing apparatus and the weight of a nonwoven fabric is continuously measured in the width direction of the nonwoven fabric by a weight measuring apparatus and a lip of a part corresponding to a place having partially heavier weight or a place having partially lighter weight is automatically changed. (see Patent Document 4).

An apparatus for producing spunbond nonwovens has a rectangular ejector containing a jetting hole part having a plurality of minute-deformation means for deforming the slit width regulation member in the slit length direction. The length of the slit width regulation parts is not defined (see Patent Document 5).

These Patent Documents each describe a process for producing a spunbonded nonwoven fabric having excellent evenness, and indicate that fibers are forcedly charged to thereby improve the openability of the fibers, that a continuous fiber group is rocked to thereby regulate the arrangement of the fibers, and that secondary air streams flowing in along the outer surface of the skirt of an air sucker are regulated. However, these Patent Documents neither describe nor propose any method for coping with problems such as fluctuations in the amount of fibers ejected from a spinneret, the ejection amount varying depending on the kind of fibers being produced, and changes in air streams flowing in toward the collecting conveyor from the outside. The spunbonded nonwoven fabrics produced by such conventional production processes have a problem in that it is impossible to constantly obtain high evenness.

Prior Art Documents

Patent Documents

> Patent Document 1: JP-A-H05-186953
> Patent Document 2: JP-A-H05-195403
> Patent Document 3: JP-A-H07-316966
> Patent Document 4: JP-A-H09-228223
> Patent Document 5: US 5,487,655

Summary of the Invention

Technical Problems

An object of the present invention is to provide a process for stably producing a spunbonded nonwoven fabric having excellent evenness even when the spunbonded nonwoven fabric is any of various kinds or is produced under any of various conditions, by always keeping the CV value in basis weight in a width direction at 4.0% or less even in a case where the amount of the continuous fiber group ejected from the spinneret or the rate of nonwoven-fabric production changes and such changes might enhance unevenness in basis weight.

Another object of the present invention is to provide an apparatus for producing a spunbonded nonwoven fabric, the apparatus being capable of stably producing a spunbonded nonwoven fabric having excellent evenness even when the spunbonded nonwoven fabric is any of various kinds or is produced under any of various conditions. Solution to Problems

The present invention employs the following means in order to overcome the problems.

The process for producing a spunbonded nonwoven fabric in the present invention is a process for producing a spunbonded nonwoven fabric by ejecting a continuous fiber group from a spinneret, thinning and stretching the continuous fiber group with a rectangular ejector, and collecting the continuous fiber group in a nonwoven fabric form, wherein the rectangular ejector has a jetting hole part having a pair of slit width regulation parts which faces each other and extends continuously along a long-side direction of the jetting hole, at least one of the slit width regulation parts being a slit width regulation member which is composed of an integrated member extending continuously along the long-side direction of the jetting hole, a plurality of minute-deformation means which minutely deforms the slit width regulation member is disposed along a long-side direction of the slit width regulation member, and a nonwoven fabric which has been collected is examined to determine a basis-weight distribution thereof in a width direction and the slit width regulation member is partly and minutely deformed by the minute-deformation means on the basis of a determined value thereof to partly change a slit width of the jetting hole by its minute deformation, thereby regulating a basis-weight distribution thereof, wherein the pair of slit width regulation parts has a length of 10 mm or larger along a running direction of the continuous fiber group.

In a preferred embodiment of the process for producing a spunbonded nonwoven fabric in the present invention, the minute-deformation means is disposed at an interval of 10 to 200 mm along the long-side direction of the slit width regulation member.

In a preferred embodiment of the process for producing a spunbonded nonwoven fabric in the present invention, the basis-weight distribution of the nonwoven fabric in a width direction, the nonwoven fabric having been collected, is determined on-line and the determined value thereof is fed back to automatically control a slit gap of the rectangular ejector.

The apparatus for producing a spunbonded nonwoven fabric is an apparatus for producing a spunbonded nonwoven fabric, comprising at least a spinneret, a rectangular ejector, and a collecting conveyor, wherein the rectangular ejector has a jetting hole part having a pair of slit width regulation parts which faces each other and extends continuously along a long-side direction of the jetting hole, at least one of the slit width regulation parts being a slit width regulation member which is composed of an integrated member extending continuously along the long-side direction of the jetting hole, and a plurality of minute-deformation means which minutely deform the slit width regulation member is disposed along a long-side direction of the slit width regulation member, wherein the pair of slit width regulation parts has a length of 10 mm or larger along a running direction of the continuous fiber group.

In a preferred embodiment of the apparatus for producing a spunbonded nonwoven fabric in the present invention, the apparatus further comprises an on-line basis weight meter.

Advantageous Effects of the Invention

The present invention makes it possible to stably obtain a spunbonded nonwoven fabric having excellent evenness even when the spunbonded nonwoven fabric is any of various kinds or is produced under any of various conditions, by always keeping the CV value in basis weight in a width direction at 4.0% or less even in a case where the amount of the continuous fiber group ejected from the spinneret or the rate of nonwoven-fabric production changes and such changes might enhance unevenness in basis weight.

Brief Description of the Drawing

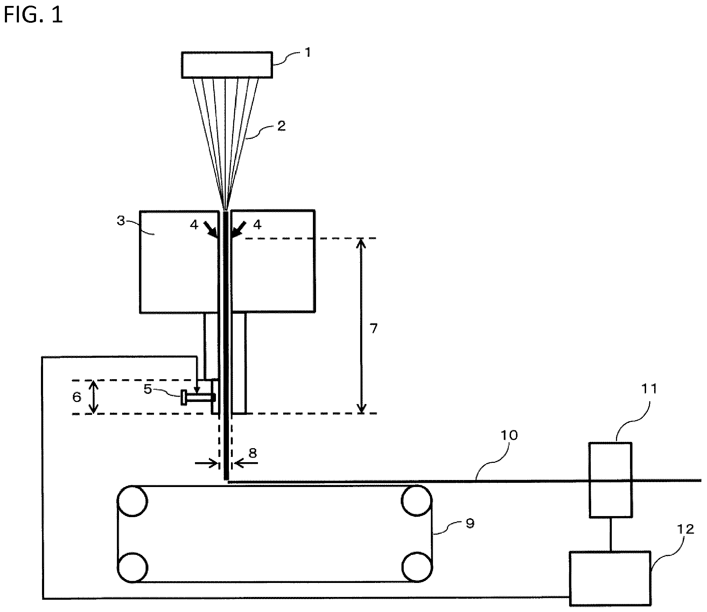

[FIG. 1] FIG. 1 is a side view of one example of the configuration of an apparatus for producing a spunbonded nonwoven fabric in the present invention. A slit width regulation member is minutely deformed by minute-deformation means 5 included in a rectangular ejector 3, the minute-deformation means 5 being arranged in a row along the direction perpendicular to the plane of FIG. 1. Because of this, the slit width 8 in any desired part in a width direction can be finely regulated.

Description of Embodiments

The process for producing a spunbonded nonwoven fabric in the present invention is a process for producing a spunbonded nonwoven fabric by ejecting a continuous fiber group from a spinneret, thinning and stretching the continuous fiber group with a rectangular ejector, and collecting the continuous fiber group in a nonwoven fabric form, wherein the rectangular ejector has a jetting hole part having a pair of slit width regulation parts which faces each other and extends continuously along a long-side direction of the jetting hole, at least one of the slit width regulation parts being a slit width regulation member which is composed of an integrated member extending continuously along the long-side direction of the jetting hole, a plurality of minute-deformation means which minutely deform the slit width regulation member is disposed along a long-side direction of the slit width regulation member, and a nonwoven fabric which has been collected is examined to determine a basis-weight distribution thereof in a width direction and the slit width regulation member is partly and minutely deformed by the minute-deformation means on the basis of the determined value thereof to partly change a slit width of the jetting hole by its minute deformation, thereby regulating a basis-weight distribution thereof.

FIG. 1 is a side view of one example of the constitution of an apparatus for use in the production of a spunbonded nonwoven fabric in the present invention. The process for producing a spunbonded nonwoven fabric in the present invention is a process for producing a spunbonded nonwoven fabric having a CV value in basis weight in a width direction of 4.0% or less. This process for producing a spunbonded nonwoven fabric includes, as shown in FIG. 1, ejecting a continuous fiber group from a spinneret 1, thinning and stretching the continuous fiber group with a rectangular ejector 3, and collecting the continuous fiber group in a nonwoven fabric form, and the rectangular ejector 3 has a jetting hole part having a pair of slit width regulation parts which face each other and extends continuously along the long-side direction of the jetting hole (the direction perpendicular to the plane of FIG. 1), at least one of the slit width regulation parts being a slit width regulation member which is composed of an integrated member extending continuously along the long-side direction of the jetting hole, a plurality of minute-deformation means 5 which minutely deforms the slit width regulation member is disposed along the long-side direction of the slit width regulation member, and a nonwoven fabric which has been collected is examined to determine a basis-weight distribution thereof in a width direction and the slit width regulation member is partly and minutely deformed by the minute-deformation means 5 on the basis of the determined value thereof to partly change the slit width 8 of the jetting hole by the minute deformation, thereby regulating a basis-weight distribution thereof.

It is important for the process for producing a spunbonded nonwoven fabric in the present invention that the slit width regulation member should be partly and minutely deformed by the minute-deformation means on the basis of the determined value of the basis-weight distribution of a nonwoven fabric in a width direction, the nonwoven fabric having been collected, and that the slit width of the jetting hole be partly controlled by the minute deformation.

Examples of methods for determining the basis-weight distribution of a nonwoven fabric in a width direction include a method in which a nonwoven fabric produced is sampled at a given pitch along the width direction throughout the whole width and the mass of each sample is measured and divided by the area of the sample to calculate the basis weight. In an embodiment of this method, the width-direction length of each sample piece is preferably 10 to 200 mm, more preferably 20 to 100 mm, even more preferably 25 to 50 mm.

In the case where the width-direction length of each sample is 10 mm or larger, such samples have excellent handleability when cut out using scissors, cutter, or the like and can be examined for the basis weight in a short time. Meanwhile, in the case where the width-direction length of each sample piece is 200 mm or less, it is possible to suitably determine a displacement amount and perform accurate control, in partly controlling the slit width of the jetting hole of the rectangular ejector using the minute-deformation means on the basis of the determined value of the basis-weight distribution of the nonwoven fabric in a width direction.

In an embodiment, the running-direction length of each sample is preferably 50 to 3,000 mm, more preferably 100 to 2,000 mm, even more preferably 500 to 1,000 mm. In the case where the running-direction length of each sample is 50 mm or larger, it is possible to perform precise and accurate control in partly controlling the slit width of the jetting hole of the rectangular ejector using the minute-deformation means on the basis of the determined value of the basis-weight distribution of the nonwoven fabric in a width direction. Meanwhile, in the case where the running-direction length of each sample is 3,000 mm or less, such samples have excellent handleability when cut out using scissors, cutter, or the like and can be examined for the basis weight in a short time.

Examples of methods for determining the basis weight of a nonwoven fabric in a width direction further include a method in which a scanning basis weight meter employing radiation is used. With respect to the kind of radiation, it is preferred to use X rays, β rays, or the like. From the standpoint of safety during handling, it is more preferred to use soft X rays in a manner which results in a leakage radiation amount reduced to meet standards for not necessitating controlled-area setting.

In the case of using a scanning basis weight meter, the basis weight meter can be disposed in the line for the steps in the nonwoven-fabric production to determine a basis weight on-line, or the basis weight meter can be disposed separately from the production steps to determine a basis weight off-line. In a more preferred embodiment, the basis weight is determined on-line because more rapid determination is possible. In the case of using a scanning basis weight meter on-line, the scanning speed in an embodiment is preferably 50 to 500 mm/sec, more preferably 100 to 400 mm/sec, even more preferably 150 to 300 mm/sec. In the case where the scanning speed is 50 mm/sec or more, the basis weight can be determined in a short time. Meanwhile, in the case where the scanning speed is 500 mm/sec or less, errors due to waving of the nonwoven fabric, etc. are small and the basis weight can be accurately determined.

In the case of using a scanning basis weight meter, it is preferable that the nonwoven fabric should be examined for the basis-weight distribution thereof in a width direction multiple times at different positions along the running direction of the nonwoven fabric to determine an average for these examinations, in order to more accurately determine the basis-weight distribution thereof in a width direction. In the case where a scanning basis weight meter is disposed in the line for the steps in the nonwoven-fabric production to determine a basis weight on-line, the basis weight meter is operated to scan the nonwoven fabric in the width direction thereof multiple times in given positions along the running direction of the nonwoven fabric. In an embodiment, the number of examinations to be made along the running direction of the nonwoven fabric when using a scanning basis weight meter, i.e., the number of scanning operations, is preferably 5 to 50, more preferably 10 to 40, even more preferably 15 to 30. In the case where the number of examinations to be made along the running direction of the nonwoven fabric is 5 or larger, the running-direction fluctuations in basis weight exert a limited influence, making it possible to preform precise and accurate control in partly controlling the slit width of the jetting hole of the rectangular ejector using the minute-deformation means on the basis of the determined value of the basis-weight distribution of the nonwoven fabric in a width direction. Meanwhile, in the case where the number of examinations to be made along the running direction of the nonwoven fabric is 50 or less, the examinations can be carried out in a short time.

The rectangular ejector 3 used in the present invention, which is shown in FIG. 1, is a rectangular ejector that has a slit perpendicular to the running direction of the nonwoven fabric 10 and that, in producing a spunbonded nonwoven fabric, is used in the following manner: a continuous fiber group 2 extruded from a spinneret 1 are passed through the slit, drawn with compressed air 4, and then jetted from a jetting hole onto a collecting conveyor 9. The rectangular ejector 3 used in the present invention has a pair of slit width regulation parts which faces each other and extends continuously along the long-side direction of the jetting hole. At least one of the slit width regulation parts is a slit width regulation member which is composed of an integrated member extending continuously along the long-side direction of the jetting hole. A plurality of minute-deformation means 5 which minutely deform the slit width regulation member is disposed along the long-side direction of the slit width regulation member.

In an embodiment, the jetting hole of the rectangular ejector used in the present invention has a slit width of preferably 2 to 20 mm, more preferably 3 to 14 mm, even more preferably 4 to 8 mm. In the case where the jetting hole has a slit width of 2 mm or larger, this ejector can be made less apt to suffer the fouling caused when the continuous fiber group comes into contact with the inlet or inner walls of the slit. In addition, the jetting hole can be inhibited from suffering slit width fluctuations due to such fouling. Meanwhile, in the case where the slit width of the jetting hole is 20 mm or less, the amount of compressed air to be jetted from the ejector can be reduced, resulting in a reduced energy loss and making it possible to more efficiently produce a spunbonded nonwoven fabric.

The slit width of the jetting hole is preferably constant over the whole length along the running direction of the continuous fiber group, from the inlet to outlet of the rectangular ejector. However, the jetting hole may have different slit widths. In particular, it is preferable that the portion ranging from the inlet to a mixing part with compressed air should be tapered so that the slit gap becomes smaller from the inlet toward the mixing part, from the standpoint of diminishing contact with the continuous fiber group.

In an embodiment, the maximum amount in which the slit width of the jetting hole can be controlled is preferably 0.1 to 20%, more preferably 0.2 to 15%, even more preferably 0.4 to 10%, based on a reference width which is the jetting-hole slit width regarded as constant along the long-side direction. In the case where the slit width control amount for the jetting hole is 0.1% or larger, the basis-weight distribution thereof in a width direction can be efficiently regulated. Meanwhile, in the case where the slit gap control amount is 20% or less, the ejector can be inhibited from having a complicated structure and the ejector device can be inhibited from having an increased cost accordingly. The term "reference width which is the jetting-hole slit width regarded as constant along the long-side direction" means the initially set slit width in the case where the slit width has been evenly set initially. In the case where the slit partly has a different initially set width value, that term means an average of the initially set slit width values in the long-side direction.

In an embodiment, the distance 7 from the mixing part with the compressed air to the outlet of the slit is preferably 50 to 600 mm, more preferably 150 to 500 mm, even more preferably 250 to 400 mm. In the case where the distance from the mixing part with the compressed air to the outlet of the slit is 50 mm or more, the part where the slit width of the jetting hole is controllable can be sufficiently ensured. Meanwhile, in the case where the distance from the mixing part with the compressed air to the outlet of the slit is 600 mm or less, the slit width of the jetting hole can be highly accurately maintained over the whole length along the running direction of the continuous fiber group and the long-side direction of the jetting hole.

A rectangular ejector is frequently used together with a pair of plate members, called a skirt, disposed beneath the rectangular ejector. In the present invention, the skirt is regarded as a part of the ejector, and all the dimensions regarding the slit part of the rectangular ejector, such as the slit width of the jetting hole and the distance from the mixing part with the compressed air to the outlet of the slit, are dimensions for which the length of the skirt part has been taken into account.

In the present invention the length 6 of the slit width regulation parts along the running direction of the continuous fiber group is preferably 10 to 100 mm, more preferably 20 to 90 mm, even more preferably 30 to 80 mm. In the case where the length of the slit width regulation parts along the running direction of the continuous fiber group is 10 mm or larger, the amount of fibers being ejected from the part can be highly accurately controlled efficiently with a slight displacement amount, that is, while minimizing interference with the vicinity. It is hence possible to highly accurately regulate the basis-weight distribution. Meanwhile, in the case where the length of the slit width regulation parts along the running direction of the continuous fiber group is 100 mm or less, it is easy to partly and minutely deform the slit width regulation member by the minute-deformation means. In addition, the basis-weight distribution thereof in a width direction can be inhibited from excessively changing with an extremely minute displacement amount, and the basis-weight distribution thereof in a width direction can be more accurately regulated.

In an embodiment, the interval at which the minute-deformation means of the rectangular ejector used in the present invention is disposed along the long-side direction of the slit width regulation member is preferably 10 to 200 mm, more preferably 20 to 150 mm, even more preferably 25 to 100 mm. By regulating the interval at which the minute-deformation means is disposed along the long-side direction to preferably 10 mm or more, more preferably 20 mm or more, even more preferably 25 mm or more, not only interference by adjacent minute-deformation means can be minimized but also the ejector does not have an excessively complicated structure. It is hence possible to inhibit the ejector production cost from increasing and to inhibit the operation of regulation by the minute-deformation means from becoming complicated. Meanwhile, by regulating the interval at which the minute-deformation means is disposed along the long-side direction to preferably 200 mm or less, more preferably 150 mm or less, even more preferably 100 mm or less, the slit width regulation member can be minutely deformed locally, making it possible to more accurately regulate the basis-weight distribution thereof in a width direction to yield a spunbonded nonwoven fabric having evenness in basis weight.

In the present invention, when a portion of the jetting hole which lies in a certain position along the long-side direction of the rectangular ejector is made to have a reduced slit width, then the flow rate of compressed air passing through that portion becomes lower than that of compressed air passing through the other portions, and hence, the amount of the continuous fiber group passing through that portion becomes relatively small accordingly. Meanwhile, when a portion of the jetting hole is made to have an increased slit width, then the flow rate of compressed air passing through that portion becomes higher than that of compressed air passing through the other portions, and hence, the amount of the continuous fiber group passing through that portion becomes relatively large accordingly. Consequently, for regulating the slit width of the jetting hole of the rectangular ejector on the basis of a determined value of the basis-weight distribution of a nonwoven fabric in a width direction, the nonwoven fabric having been collected, use may be made of a method in which the portion corresponding to a larger basis weight, which is determined from the results of the examination for the basis-weight distribution thereof in a width direction, is made to have a reduced slit width and the portion corresponding to a smaller basis weight is made to have an increased slit width. By partly changing the slit width in this manner, the basis-weight distribution of the nonwoven fabric in a width direction can be regulated so as to become more even.

The interval at which the nonwoven fabric is examined for basis-weight distribution along the width direction thereof is preferably the same as or smaller than the interval at which the minute-deformation means of the rectangular ejector is disposed along the long-side direction, because this configuration renders the regulation of basis-weight distribution easy.

It is important that the rectangular ejector used in the present invention should have a pair of slit width regulation parts which faces each other and extends continuously along the long-side direction of the jetting hole, at least one of the slit width regulation parts be a slit width regulation member which is composed of an integrated member extending continuously along the long-side direction of the jetting hole, and a plurality of minute-deformation means which minutely deform the slit width regulation member is disposed along the long-side direction of the slit width regulation member. The slit width of the jetting hole of the rectangular ejector is regulated by partly and minutely deforming the slit width regulation member by the minute-deformation means.

The pair of slit width regulation parts, which faces each other and extends continuously along the long-side direction of the jetting hole, is preferably constituted of a pair of flat plates (slit width regulation members) which faces each other and extends continuously along the long-side direction. In the case of this structure, it is preferred to use a method in which at least one of the flat plates is partly made nearer to or apart from the other flat plate by the minute-deformation means to thereby change the slit width of the jetting hole (this method is hereinafter sometimes referred to as "flat-plate deformation mode").

In a preferred embodiment, a specific method of the minute-deformation means is as follows. Bolts are disposed on the outer side of one of the flat plates, the bolts extending to the surface of the flat plate, and a mechanism is configured so that when the bolts are rotated in one direction, the flat plate moves inward, i.e., becomes nearer to the other flat plate, and when the bolts are rotated in the opposite direction, the flat plate moves outward, i.e., becomes apart from the other flat plate. In this embodiment, a minutely deformable part of the flat plate lies under a fulcrum, which is located above (upstream from) the bolts. In the case where this mechanism is employed, the distance from the fulcrum to the slit outlet is the length of the slit width regulation parts along the running direction of the continuous fiber group. It is preferred to dispose the bolts perpendicularly to the surface of the flat plate, because this disposition enables the slit width of the jetting hole to be efficiently changed.

In the case where the mechanism using bolts as the minute-deformation means is employed, examples of methods for rotating the bolts include a method in which the bolts are manually rotated using a wrench or the like and a method in which small motors are disposed to rotate the bolts by remote control. A more preferred embodiment is the method in which the bolts are rotated by remote control, because the worker need not approach the nonwoven-fabric production line and the safety of the worker can hence be ensured, and because the control operation can be rapidly performed. As the motors for rotating the bolts, it is preferred to use stepping motors, servomotors or the like. It is more preferred to use servomotors, because high control accuracy with respect to true values and high repetition accuracy are obtained therewith.

Alternatively, heater rods may be disposed as minute-deformation means in place of the bolts or heater rods may be connected to the bolts to constitute minute-deformation means, thereby configuring a mechanism so that when some of the heater rods are elongated by heating, the flat plate partly moves inward, i.e., partly becomes nearer to the other flat plate, and when some of the heater rods are shrunk by cooling, the flat plate partly moves outward, i.e., partly becomes apart from the other flat plate. This is also a preferred embodiment because the excellent ability to perform minute-width control is attained.

In still another method for minutely changing the slit width of the jetting hole of the rectangular ejector used in the present invention, at least one of the pair of flat plates (slit width regulation members) facing each other, which constitute the vicinity of the outlet of the slit, is made to have a structure constituted of a laminate of two metals differing in coefficient of thermal expansion, and heaters are disposed as minute-deformation means on the outer side of this flat plate. By regulating the temperature of each heater, the flat plate is partly warped to thereby regulate the gap between this flat plate and the other flat plate. This method is also a preferred embodiment. A further usable method for minutely changing the slit width of the jetting hole is to directly warp at least one of the flat plates by applying external force thereto, thereby controlling the gap between this flat plate and the other flat plate.

In an embodiment of these methods, the thickness of the flat plate which is a slit width regulation member is preferably 3 to 20 mm, more preferably 5 to 15 mm, even more preferably 7 to 10 mm. In the case where the thickness of the flat plate is 3 mm or larger, this flat plate can withstand repeated deformations caused by the minute-deformation means. Meanwhile, in the case where the thickness of the flat plate is 20 mm or less, a slit-width change amount sufficient for locally regulating the basis-weight distribution of the nonwoven fabric in a width direction can be easily imparted, making it possible to rapidly and accurately regulate the slit width.

In a preferred embodiment, thin-walled slit portions are disposed along the running direction of the continuous fiber group and/or the long-side direction of the rectangular ejector, on the opposite side of the flat plate from the ejector inner-wall side, where the continuous fiber group runs. In this embodiment, the flat plate can be minutely deformed more locally, enabling the basis-weight distribution to be regulated rapidly and accurately. In a more preferred embodiment, these slit portions are disposed so as to be located between the plurality of minute-deformation means disposed along the long-side direction of the rectangular ejector and to extend along the running direction of the continuous fiber group.

Thus, the movability can be evenly enhanced throughout the whole dimension along the long-side direction of the rectangular ejector.

Use may also be made of a method in which a spring steel of a thin plate shape is used as at least one of the flat plates and this spring steel is made nearer to or apart from the other flat plate by precision actuators (minute-deformation means) disposed on the outer side of the spring steel. This method is also a preferred method for changing the slit width of the jetting hole of the rectangular ejector in the present invention.

Furthermore, use may be made of a method in which a lip is disposed at the slit outlet of the jetting hole of the rectangular ejector throughout the whole length along the long-side direction and the slit width of the jetting hole is changed by partly sliding the lip (this method is hereinafter sometimes referred to as "lip slide mode").

Among the specific methods shown above for changing the slit width of the jetting hole, more preferable examples thereof include the flat-plate deformation method in which a flat plate is minutely deformed by bolts and/or heater rods disposed on the outer side of the flat plate, the method in which the warpage of a flat plate is changed by, for example, regulating the temperatures of heaters disposed on the outer side of the flat plate, and the method in which a spring steel is moved by precision actuators, because in these methods, the slit width regulation parts can have a length of 10 mm or larger along the running direction of the continuous fiber group.

A plurality of minute-deformation means may be disposed along the running direction of the continuous fiber group.

In the rectangular ejector used in the present invention, the slit width regulation parts preferably have a length of 10 mm or larger along the running direction of the continuous fiber group. This configuration enables the flow rate of compressed air to be efficiently changed with a minute change amount of the slit width, making it possible to efficiently control the amount of the continuous fiber group, which changes with the flow rate of compressed air as stated above.

It is preferable that the flat plates which are the slit with regulation members of the rectangular ejector should be disposed so that the inner walls of the ejector have no step. This configuration is effective for avoiding the occurrence of turbulent air flows within the ejector, a trouble that the continuous fiber group, when passing through the slit part, hitch on the inner walls of the ejector, resulting in spinning defects, or the accumulation of polymer soils on the inner walls.

In a preferred embodiment of the process for producing a spunbonded nonwoven fabric in the present invention, the basis-weight distribution of a nonwoven fabric in a width direction, the nonwoven fabric having been collected, is determined on-line with a basis weight meter and the determined value thereof is fed back to automatically control the slit gap of the rectangular ejector. The determined values thereof can be input to a PC (personal computer), PLC (programmable logic controller), or the like and arithmetically processed to thereby produce profile data, which can be transferred by means of analog signals, serial communication, parallel communication, Ethernet communication, or the like. The width-direction data pitch of the profile data thus produced is preferably the same as or finer than the interval at which the minute-deformation means of the rectangular ejector is disposed along the long-side direction, because this facilitates the regulation of basis-weight distribution.

There are cases where the automatic control results in extremely large differential values of slit width change amount for adjacent or near portions, thereby impairing the width-direction evenness in basis weight. In a more preferred embodiment, an algorithm is separately produced in order to avoid such a problem. A preferred method for producing an algorithm is to produce profile data at a pitch which is not larger than one-half the interval of disposition of the minute-deformation means in the long-side direction, i.e., from data on portions, the number of which is at least twice the number of the minute-deformation means disposed along the long-side direction, and to inhibit abrupt slit-width changes by averaging the deformation amounts for a plurality of slit-width regulation positions or integrating slit-width change amounts.

Meanwhile, when the slit width of the jetting hole is controlled in accordance with deformation amounts calculated from determined values of the basis-weight distribution of a nonwoven fabric in a width direction, then a nonwoven fabric having a changed basis-weight distribution due to the slit-width change reaches the basis weight meter after the lapse of a certain time period. There is hence a possibility that the direct feed-back control might lead to hunting or cycling in the basis weight of the nonwoven fabric. Because of this, a more preferred embodiment is to perform not mere proportional control but PI control, PID control, or feed-back control based on the fuzzy theory. It is also more preferred to use a method in which the amounts of slit-width regulation manually made by a skilled operator under various situations are summed up in a matrix table and the data is compared with profile data to obtain slit-width change amounts, and feed-back control is performed in accordance with the slit-width change amounts.

In an embodiment, the nonwoven fabric obtained by the process for producing a spunbonded nonwoven fabric in the present invention has a CV value in basis weight in a width direction of preferably 0 to 4.0%, more preferably 0 to 3.0%, even more preferably 0 to 2.0%. In the case where the CV value in basis weight in a width direction of the nonwoven fabric is 4.0% or less, this nonwoven fabric is more suitable for use in applications such as sanitary materials, filters, civil engineering materials, building materials, agricultural materials, vehicular materials, and household materials.

In particular, in filter applications, the nonwoven fabric is more suitable for use as the supports of separation membranes. In building material applications, the nonwoven fabric is more suitable for use as, for example, the bases of moisture-permeable waterproof sheets. Furthermore, in applications where the nonwoven fabric is used after being united with a membrane or film, this nonwoven fabric shows excellent processability and can be united without arousing troubles such as creasing.

In the present invention, an effective method for regulating the CV value in basis weight in a width direction of the nonwoven fabric to 0 to 4.0% is to control the slit width of the jetting hole of the rectangular ejector on the basis of determined values of the basis-weight distribution of a nonwoven fabric in a width direction, the nonwoven fabric having been collected. In an embodiment, the width-direction unevenness in the amount of filaments extruded from the spinneret, i.e., the CV value in a width direction in the amount of filaments ejected from the spinneret, is preferably 0 to 10%, more preferably 0 to 6%, even more preferably 0 to 2%.

In the present invention, the process for producing a spunbonded nonwoven fabric may include extruding a molten thermoplastic polymer from a spinneret, spinning the extrudate by drawing and stretching the extrudate with compressed air in the rectangular ejector, subsequently collecting the continuous fiber group jetted from the rectangular ejector on the traveling belt of a collecting conveyor to obtain a fibrous web, and subjecting the web to continuous hot press bonding or the like to unite the fibers. Thus, a spunbonded nonwoven fabric can be produced. In an embodiment, the spinning speed in this process is preferably 3,000 to 6,000 m/min, more preferably 3,500 to 5,500 m/min, even more preferably 4,000 to 5,000 m/min. By regulating the spinning speed to 3,000 m/min or more, the fibers can be more highly oriented and crystallized to improve the mechanical strength of the nonwoven fabric. Meanwhile, by regulating the spinning speed to 6,000 m/min or less, air jetted from the rectangular ejector together with the continuous fiber group can be kept less turbulent, making it possible to obtain a spunbonded nonwoven fabric having better evenness.

In an embodiment, the fibers constituting the spunbonded nonwoven fabric produced by the process for producing a spunbonded nonwoven fabric in the present invention have a single-fiber diameter of preferably 3 to 30 $\mu$m, more preferably 5 to 25 $\mu$m, even more preferably 7 to 20 $\mu$m. In the case where the single-fiber diameter of the fibers constituting the spunbonded nonwoven fabric is 3 $\mu$m or larger, spinning stability is less apt to decrease during the production of the spunbonded nonwoven fabric. Meanwhile, in the case where the single-fiber diameter of the fibers constituting the spunbonded nonwoven fabric is 30 $\mu$m or less, this spunbonded nonwoven fabric can have better evenness in basis weight.

In an embodiment, the basis weight of the spunbonded nonwoven fabric produced by the process for producing a spunbonded nonwoven fabric in the present invention is preferably 10 to 400 g/m$^2$, more preferably 15 to 350 g/m$^2$, even more preferably 20 to 300 g/m$^2$. In the case where the basis weight of the spunbonded nonwoven fabric is 10 g/m$^2$ or more, troubles such as breakage during the production process and winding on the hot press-bonding roller can be avoided, making it possible to more stably produce the spunbonded nonwoven fabric. Meanwhile, in the case where the basis weight of the spunbonded nonwoven fabric is 400 g/m$^2$ or less, the fabric production rate increases and determined values of the basis weight of a nonwoven fabric in a width direction, the nonwoven fabric having been collected, can be more rapidly fed back to regulate the slit width of the jetting hole of the rectangular ejector.

In an embodiment, the spunbonded nonwoven fabric produced by the process for producing a spunbonded nonwoven fabric in the present invention has a thickness of preferably 0.03 to 0.50 mm, more preferably 0.04 to 0.45 mm, even more preferably 0.05 to 0.40 mm. In the case where the thickness of the spunbonded nonwoven fabric is 0.03 mm or larger, excellent handleability of samples is obtained in determining the basis-weight distribution of the nonwoven fabric in a width direction by the weighing method, and in the case of determining the basis-weight distribution with an on-line basis weight meter, the occurrence of creases or the like during the process is inhibited, making it possible to more accurately determine the basis-weight distribution of the nonwoven fabric in a width direction. Meanwhile, in the case where the thickness of the spunbonded nonwoven fabric is 0.50 mm or less, samples can be more easily cut out in determining the basis-weight distribution of the nonwoven fabric in a width direction by the weighing method, and in the case of determining the basis-weight distribution with an on-line basis weight meter, the nonwoven fabric can be prevented from hitching on the sensors, etc., making it possible to more accurately determine the basis-weight distribution of the nonwoven fabric in a width direction.

In an embodiment, the spunbonded nonwoven fabric obtained by the process for producing a spunbonded nonwoven fabric in the present invention has a CV value in air flow amount in a width direction of preferably 0 to 10%, more preferably 0 to 8%, even more preferably 0 to 6%. In the case where the CV value in air flow amount in a width direction of the spunbonded nonwoven fabric is 10% or less, this spunbonded nonwoven fabric is especially suitable for use in filter applications, where the nonwoven fabric has reduced unevenness in pressure loss or collection efficiency. Furthermore, in the case of use as the support of a separation membrane, this nonwoven fabric can be stably united with a membrane or film, and hence, a separation membrane having higher evenness in separation performance can be obtained.

Since the spunbonded nonwoven fabric obtained by the process for producing a spunbonded nonwoven fabric in the present invention has excellent evenness in basis weight, this nonwoven fabric is suitable for use in various filter applications such as air filters, bag filters, electret filters, and liquid filters, membrane support applications such as diaphragms and separation membranes, civil engineering applications such as various reinforcing materials, protective materials, cable wrapping materials, and repair materials for underground buries pipes, building material applications such as roofing base fabric and house wraps, vehicular applications such as interior automotive trims and automotive components, furniture/interior applications such as the bases of various tapes, bases of tufts/carpets, furniture components, and wallpaper, household material applications such as wipers, cleaning materials, weed-control sheets, garden planters, various packaging materials, and storage containers, and industrial material applications such as electrical materials.

Examples

The process for producing a spunbonded nonwoven fabric in the present invention is described below in detail by reference to Examples. The properties of spunbonded nonwoven fabric described hereinabove and properties mentioned in the following Examples were determined by the following methods.

(1) Melting point (°C) of resin:

Using differential scanning calorimeter Type DSC-2, manufactured by PerkinElmer, Inc., three samples were examined under the conditions of a heating rate of 20 °C/min. An average of the temperatures corresponding to extreme values in the melting endothermic curves obtained was taken as the melting point of the resin. With respect to any resin which, in an examination with the differential scanning calorimeter, gave melting endothermic curves having no extreme values, this resin was repeatedly subjected three times to an operation in which the resin was heated on a hot plate and examined with a microscope to measure the temperature at which the resin had completely melted. An average of the measured values was taken as the melting point.

(2) Intrinsic viscosity IV of resin:

The intrinsic viscosity IV of a poly(ethylene terephthalate) resin was determined by conducting a measurement three times by the following method and averaging the measured values. 8 g of a sample was dissolved in 100 mL of o-chlorophenol. The solution was examined at a temperature of 25°C with an Ostwald viscometer, and the relative viscosity $\eta r$ was determined using the following equation.

$$\eta r = \eta/\eta 0 = (t \times d)/(t0 \times d0)$$

where

$\eta$: viscosity of polymer solution,
$\eta 0$: viscosity of o-chlorophenol,
t: falling time of solution (sec),
d: density of solution (g/cm$^3$),
t0: falling time of o-chlorophenol (sec),
d0: density of o-chlorophenol (g/cm$^3$).

Subsequently, the intrinsic viscosity IV was calculated from the relative viscosity $\eta r$ using the following equation.

$$IV = 0.0242\eta r + 0.2634$$

(3) Average single-fiber diameter ($\mu$m):

Ten sample pieces were randomly taken out of a nonwoven fabric, and photographs thereof were taken with a scanning electron microscope at a magnification of 500 to 3,000 diameters. Ten fiber images were selected from the image of each sample, and the hundred fiber images in total were examined for diameter. An average of the measured values was rounded off to the nearest whole number to determine the average single-fiber diameter.

(4) CV value (%) in basis weight in width direction and basis weight (g/m$^2$) of nonwoven fabric:

Twenty-two sample sheets having a size of 50 mm (width) $\times$ 1,000 mm (length) were taken out of a 1,100-mm central portion of a nonwoven fabric, the central portion being the portion remaining after each width-direction edge portion was removed by 50 mm. The mass of each sample was measured on the order of 0.001 g, and a CV value [(standard deviation)÷(average value)×100] thereof was determined by rounding off to the nearest tenth. The basis weight of the nonwoven fabric was determined by averaging the masses of the twenty-two samples, converting the average value to a mass per unit area, and rounding off this value to the nearest whole number.

(5) Thickness (mm) of nonwoven fabric:

In accordance with JIS L 1906 (2000) 5.1, the thickness of a nonwoven fabric was measured at ten points over a width-direction length of 1 m at a regular interval, using an indenter with a diameter of 10 mm under a load of 10 kPa. The measurement was made on the order of 0.01 mm. An average of the measured values was rounded off to the nearest hundredth.

(6) CV value (%) in air flow amount in width direction of nonwoven fabric:

In accordance with the Frazir type method as provided for in JIS L 1906 (2000) 4.8(1), a nonwoven fabric was examined for air flow amount at ten points over a width-direction length of 1 m at a regular interval at a barometer pressure of 125 Pa. The measurement was made on the order of 1 cc/cm$^2$/sec. A CV value [(standard deviation)÷(average value)×100] thereof was determined by rounding off to the nearest whole number.

(Example 1)

A poly(ethylene terephthalate) resin which had an intrinsic viscosity IV of 0.65 and a melting point of 260°C and contained 0.3% by mass titanium oxide and which had been dried to have a water content of 50 ppm or less was melted at a temperature of 295°C and extruded through minute holes at a spinneret temperature of 295°C. Thereafter, the extrudate was spun at a spinning speed of 4,200 m/min with a rectangular ejector having a slit width regulation mechanism, the ejector having a slit which extended along the width direction of nonwoven fabric and including bolts for slit width regulation as minute-deformation means. Thus, filaments each having a circular cross-section were obtained. The continuous fiber group was collected on the travelling net conveyor to obtain a fibrous web. Subsequently, the collected fibrous web was passed between two metallic rolls with an even surface to press-bond the web with heating at a surface temperature of each metallic roll of 230°C and at a linear pressure of 588 N/cm. Thus, a spunbonded nonwoven fabric having an average single-fiber diameter of 12 μm, basis weight of 50 g/m$^2$, thickness of 0.20 mm, and width of 120 cm was obtained. The rectangular ejector had been configured so that: the distance from the mixing part with compressed air to the slit outlet was 300 mm; the slit width regulation parts had a length of 30 mm along the running direction of the continuous fiber group; the interval at which the bolts for regulation as minute-deformation means had been disposed along the long-side direction was 50 mm; and the reference slit width was 5.00 mm.

Twenty-two sample sheets having a size of 50 mm (width) × 1,000 mm (length) were taken out of a 1,100-mm central portion of the spunbonded nonwoven fabric obtained, the central portion being the portion remaining after each width-direction edge portion was removed by 50 mm. The samples were examined for the basis-weight distribution thereof in a width direction. As a result, the CV value in basis weight in a width direction was found to be 4.9%.

On the basis of the results of the examination for basis weight distribution, control was performed by rotating the bolts for regulation disposed on the outer side of a flat plate. In this control, the slit width of a portion of the jetting hole of the rectangular ejector which corresponded to a portion of the nonwoven fabric that had a high basis weight was narrowed, and the slit width of a portion of the jetting hole which corresponded to a portion of the nonwoven fabric that had a low basis weight was widened. The maximum control amount in this control was 0.20 mm (4.0% based on the average value).

The spunbonded nonwoven fabric obtained after the control of the slit width of the jetting hole of the rectangular ejector was examined for the basis-weight distribution thereof in a width direction in the same manner as shown above. As a result, the CV value in basis weight in a width direction was found to be 4.3%. Furthermore, the examination for basis-weight distribution and the operation for regulating the slit width of the rectangular ejector were repeatedly conducted twice in the same manner as described above (three times in total). As a result, the spunbonded nonwoven fabric obtained had the CV value in basis weight in a width direction of 3.5%. The total period required for these operations was 75 minutes. The results are shown in Table 1.

(Example 2)

A spunbonded nonwoven fabric was produced in the same manner as in Example 1, except that a scanning soft-X-ray basis weight meter was disposed in a production step of the nonwoven fabric and the nonwoven fabric was examined on-line for the basis-weight distribution thereof in a width direction. The scanning speed of the basis weight meter was set at 150 mm/sec, and the basis-weight distribution of the nonwoven fabric in a width direction was determined from averages for twenty scanning operations. The slit width of the jetting hole of the rectangular ejector was automatically regulated on the basis of the results of the determination, and this automatic regulation was repeatedly conducted three times. As a result, the spunbonded nonwoven fabric obtained had the CV value in basis weight in a width direction of 2.9%. The total time period required for these operations was 12 minutes. The results are shown in Table 1.

(Example 3)

A spunbonded nonwoven fabric was produced and examined for the basis-weight distribution thereof in a width direction in the same manner as in Example 2, except that the regulation of the slit width of the rectangular ejector was automated. For the automatic control, use was made of a method in which the obtained data on the basis-weight distribution of the nonwoven fabric in a width direction were fed back to the rectangular ejector and servomotors attached to bolts for slit width regulation were automatically operated. The examination of the nonwoven fabric for the basis-weight distribution thereof in a width direction and the automatic control of the slit width of the jetting hole of the rectangular ejector were repeatedly conducted three times. As a result, the spunbonded nonwoven fabric obtained had the CV value in basis weight in a width direction of 2.3%. The total time period required for these operations was 12 minutes. The results are shown in Table 1.

(Example 4)

A spunbonded nonwoven fabric was produced and examined for the basis-weight distribution thereof in a width direction in the same manner as in Example 3, except that the length of the slit width regulation parts of the rectangular ejector along the running direction of the continuous fiber group was changed to 20 mm. The examination of the nonwoven fabric for the basis-weight distribution thereof in a width direction and the automatic control of the slit width of the jetting hole of the rectangular ejector were repeatedly conducted three times. As a result, the spunbonded nonwoven fabric obtained had the CV value in basis weight in a width direction of 2.8%. The total time period required for these operations was 12 minutes. The results are shown in Table 1.

(Example 5)(Reference)

A spunbonded nonwoven fabric was produced and examined for the basis-weight distribution thereof in a width direction in the same manner as in Example 3, except that the length of the slit width regulation parts of the rectangular ejector along the running direction of the continuous fiber group was changed to 5 mm. The examination of the nonwoven fabric for the basis-weight distribution thereof in a width direction and the automatic regulation of the slit width of the jetting hole of the rectangular ejector were repeatedly conducted three times. As a result, the spunbonded nonwoven fabric obtained had the CV value in basis weight in a width direction of 3.7%. The total time period required for these operations was 12 minutes. The results are shown in Table 1.

Table 1

|  |  | Example 1 | Example 2 | Example 3 | Example 4 | Example 5* |
|---|---|---|---|---|---|---|
| Fiber composition | Kind of resin *2 | PET | PET | PET | PET | PET |
|  | Melting point (°C) | 260 | 260 | 260 | 260 | 260 |
| Spinning speed (m/min) |  | 4200 | 4200 | 4200 | 4200 | 4200 |

(continued)

| | | Example 1 | Example 2 | Example 3 | Example 4 | Example 5* |
|---|---|---|---|---|---|---|
| Rectangular ejector | Distance from mixing part to slit outlet (mm) | 300 | 300 | 300 | 300 | 300 |
| | Minute-deformation means | bolts | bolts | bolts | bolts | bolts |
| | Length of slit width regulation parts along running direction of the continuous fiber group (mm) | 30 | 30 | 30 | 20 | 5 |
| | Interval in long-side direction between minute-deformation means (mm) | 50 | 50 | 50 | 50 | 50 |
| | Reference width of slit (mm) | 5.00 | 5.00 | 5.00 | 5.00 | 5.00 |
| | Maximum control amount of slit width (mm) | 0.20 | 0.20 | 0.20 | 0.20 | 0.20 |
| | Maximum control amount of slit width (%) | 4.0 | 4.0 | 4.0 | 4.0 | 4.0 |
| Conditions for hot press bonding | Shape of roll surface | even | even | even | even | even |
| | Temperature (°C) | 230 | 230 | 230 | 230 | 230 |
| | Linear pressure (N/cm) | 588 | 588 | 588 | 588 | 588 |
| Properties of nonwoven fabric | Fiber diameter ($\mu$m) | 12 | 12 | 12 | 12 | 12 |
| | Basis weight (g/m$^2$) | 50 | 50 | 50 | 50 | 50 |
| | Thickness (mm) | 0.20 | 0.20 | 0.20 | 0.20 | 0.20 |
| | Width (cm) | 120 | 120 | 120 | 120 | 120 |
| Examination for basis-weight distribution | On-line/off-line | off-line | on-line | on-line | on-line | on-line |
| | Examination method | weighing method | soft-X-ray basis weight meter | soft-X-ray basis weight meter | soft-X-ray basis weight meter | soft-X-ray basis weight meter |
| | Examination width (mm) | 1100 | 1100 | 1100 | 1100 | 1100 |
| | Examination interval in width direction (mm) | 50 | 50 | 50 | 50 | 50 |
| | Examination size in long-side direction (mm) | 1000 | - | - | - | - |
| | Scanning speed (mm/sec) | - | 150 | 150 | 150 | 150 |
| | Number of scanning operations (times) | - | 20 | 20 | 20 | 20 |
| Regulation method | | manual | manual | automatic | automatic | automatic |
| Number of basis-weight distribution examinations or slit control operations | | 3 | 3 | 3 | 3 | 3 |
| CV value in basis weight in width direction of nonwoven fabric (%) | | 3.5 | 2.9 | 2.3 | 2.8 | 3.7 |
| Required period (min) | | 75 | 12 | 12 | 12 | 12 |

(continued)

| Regulation method | manual | manual | automatic | automatic | automatic |
|---|---|---|---|---|---|
| CV value in air flow amount in width direction of nonwoven fabric (%) | 9 | 8 | 6 | 8 | 10 |
| Wherein * denotes a reference example. | | | | | |

(Example 6)

A spunbonded nonwoven fabric was produced and examined for the basis-weight distribution thereof in a width direction in the same manner as in Example 4, except that the amount of the molten resin ejected from the spinneret was regulated so as to result in a fiber diameter of 14 $\mu$m. The examination of the nonwoven fabric for the basis-weight distribution thereof in a width direction and the automatic regulation of the slit width of the jetting hole of the rectangular ejector were repeatedly conducted four times. As a result, the spunbonded nonwoven fabric obtained had the CV value in basis weight in a width direction of 2.9%. The total time period required for these operations was 16 minutes. The results are shown in Table 2.

(Example 7)(Reference)

A spunbonded nonwoven fabric was produced and examined for the basis-weight distribution thereof in a width direction in the same manner as in Example 6, except that the length of the slit width regulation parts of the rectangular ejector along the running direction of the continuous fiber group was changed to 5 mm. The examination of the nonwoven fabric for the basis-weight distribution thereof in a width direction and the automatic regulation of the slit width of the jetting hole of the rectangular ejector were repeatedly conducted four times. As a result, the spunbonded nonwoven fabric obtained had the CV value in basis weight in a width direction of 3.8%. The total time period required for these operations was 16 minutes. The results are shown in Table 2.

(Example 8)

A spunbonded nonwoven fabric was produced and examined for the basis-weight distribution thereof in a width direction in the same manner as in Example 3, except that the minute-deformation means of the slit width regulation mechanism of the rectangular ejector was replaced with the heater rod mode in which the slit width was controlled by the thermal elongation or shrinkage of heater rods. For automatically regulating the slit width of the jetting hole, use was made of a method in which the obtained data on the basis-weight distribution of the nonwoven fabric in a width direction were fed back to the rectangular ejector and the electric current allowed to flow through each heater rod for slit width regulation was regulated. By this method, the automatic regulation was conducted so that the slit width of a portion of the jetting hole of the rectangular ejector which corresponded to a portion of the nonwoven fabric that had a high basis weight was narrowed, and the slit width of a portion of the jetting hole which corresponded to a portion of the nonwoven fabric that had a low basis weight was widened. The maximum control amount in this control was 0.20 mm (4.0% based on the average value).

The examination of the nonwoven fabric for the basis-weight distribution thereof in a width direction and the automatic regulation of the slit width of the jetting hole of the rectangular ejector were repeatedly conducted three times. As a result, the spunbonded nonwoven fabric obtained had the CV value in basis weight in a width direction of 2.2%. The total time period required for these operations was 12 minutes. The results are shown in Table 2.

(Example 9)

A spunbonded nonwoven fabric was produced and examined for the basis-weight distribution thereof in a width direction in the same manner as in Example 8, except that the interval at which the heater rods as minute-deformation means of the rectangular ejector were disposed along the long-side direction was changed to 25 mm. The examination of the nonwoven fabric for the basis-weight distribution thereof in a width direction and the automatic regulation of the slit width of the jetting hole of the rectangular ejector were repeatedly conducted three times. As a result, the spunbonded nonwoven fabric obtained had the CV value in basis weight in a width direction of 1.9%. The total time period required for these operations was 12 minutes.

The spunbonded nonwoven fabrics of Examples 1 to 9 obtained above had the properties shown in Table 2. The spunbonded nonwoven fabrics of Examples 1 to 9 each had excellent evenness in basis weight in a width direction.

These nonwoven fabrics were examined for the CV value in air flow amount in a width direction on the supposition of use as filters. As a result, the nonwoven fabrics of Examples 1 to 9 each had the CV value in air flow amount in a width direction of 10% or less, showing that these nonwoven fabrics were suitable for use as filters.

(Comparative Example 1)

A spunbonded nonwoven fabric was produced in the same manner as in Example 1, except that use was made of a rectangular ejector not including any slit width regulation mechanism. The spunbonded nonwoven fabric obtained had the CV value in basis weight in a width direction of 4.9%.

The spunbonded nonwoven fabric of Comparative Example 1 obtained above had the properties shown in Table 2. The spunbonded nonwoven fabric of Comparative Example 1 had poor evenness in basis weight in a width direction. The nonwoven fabric was examined for the CV value in air flow amount in a width direction on the supposition of use as a filter. As a result, the nonwoven fabric of Comparative Example 1 had the CV value in air flow amount in a width direction exceeding 10%, showing that the nonwoven fabric was unsuitable for use as a filter.

Table 2

| | | Example 6 | Example 7* | Example 8 | Example 9 | Comparative Example 1 |
|---|---|---|---|---|---|---|
| Fiber composition | Kind of resin *2 | PET | PET | PET | PET | PET |
| | Melting point (°C) | 260 | 260 | 260 | 260 | 260 |
| Spinning speed (m/min) | | 4200 | 4200 | 4200 | 4200 | 4200 |
| Rectangular ejector | Distance from mixing part to slit outlet (mm) | 300 | 300 | 300 | 300 | 300 |
| | Minute-deformation means | bolts | bolts | heater rods | heater rods | - |
| | Length of slit width regulation parts along running direction of the continuous fiber group (mm) | 20 | 5 | 30 | 30 | - |
| | Interval in long-side direction between minute-deformation means (mm) | 50 | 50 | 50 | 50 | - |
| | Reference width of slit (mm) | 5.00 | 5.00 | 5.00 | 5.00 | 5.00 |
| | Maximum control amount of slit width (mm) | 0.20 | 0.20 | 0.20 | 0.20 | - |
| | Maximum control amount of slit width (%) | 4.0 | 4.0 | 4.0 | 4.0 | - |
| Conditions for hot press bonding | Shape of roll surface | even | even | even | even | even |
| | Temperature (°C) | 230 | 230 | 230 | 230 | 230 |
| | Linear pressure (N/cm) | 588 | 588 | 588 | 588 | 588 |
| Properties of nonwoven fabric | Fiber diameter ($\mu$m) | 14 | 14 | 12 | 12 | 12 |
| | Basis weight (g/m$^2$) | 50 | 50 | 50 | 50 | 50 |
| | Thickness (mm) | 0.20 | 0.20 | 0.20 | 0.20 | 0.20 |
| | Width (cm) | 120 | 120 | 120 | 120 | 120 |

(continued)

| | | Example 6 | Example 7* | Example 8 | Example 9 | Comparative Example 1 |
|---|---|---|---|---|---|---|
| Examination for basis-weight distribution | On-line/off-line | on-line | on-line | on-line | on-line | off-line |
| | Examination method | soft-X-ray basis weight meter | soft-X-ray basis weight meter | soft-X-ray basis weight meter | soft-X-ray basis weight meter | weighing method |
| | Examination width (mm) | 1100 | 1100 | 1100 | 1100 | 1100 |
| | Examination interval in width direction (mm) | 50 | 50 | 50 | 25 | 50 |
| | Examination size in long-side direction (mm) | - | - | - | - | 1000 |
| | Scanning speed (mm/sec) | 150 | 150 | 150 | 150 | - |
| | Number of scanning operations (times) | 20 | 20 | 20 | 20 | - |
| Regulation method | | automatic | automatic | automatic | automatic | none |
| Number of basis-weight distribution examinations or slit control operations | | 4 | 4 | 3 | 3 | - |
| CV value in basis weight in width direction of nonwoven fabric (%) | | 2.9 | 3.8 | 2.2 | 1.9 | 4.9 |
| Required period (min) | | 16 | 16 | 12 | 12 | - |
| CV value in air flow amount in width direction of nonwoven fabric (%) | | 8 | 10 | 6 | 5 | 14 |
| Wherein * denotes a reference example. | | | | | | |

Description of the Reference Numerals

1: Spinneret
2: Continuous fiber group
3: Rectangular ejector
4: Compressed air
5: Minute-deformation means
6: Slit width regulation part length (slit width regulation member length)
7: Distance from mixing part to outlet of slit
8: Slit width of jetting hole
9: Collecting conveyor
10: Nonwoven fabric
11: Basis weight meter
12: PC or PLC

**Claims**

1. A process for producing a spunbonded nonwoven fabric (10) by ejecting a continuous fiber group (2) from a spinneret (1), thinning and stretching the continuous fiber group with a rectangular ejector (3), and collecting the continuous fiber group (2) in a nonwoven fabric form, wherein the rectangular ejector (3) has a jetting hole part having a pair of slit width regulation parts which faces each other and extends continuously along a long-side direction of the jetting hole, at least one of the slit width regulation parts being a slit width regulation member which is composed of an integrated member extending continuously along the long-side direction of the jetting hole, a plurality of minute-deformation means (5) which minutely deforms the slit width regulation member is disposed along a long-side direction of the slit width regulation member, and a nonwoven fabric (10) which has been collected is examined to determine a basis-weight distribution thereof in a width direction and the slit width regulation member is partly and minutely deformed by the minute-deformation means (5) on the basis of a determined value thereof to partly change a slit width of the jetting hole by its minute deformation, thereby regulating a basis-weight distribution thereof, wherein the pair of slit width regulation parts has a length (6) of 10 mm or larger along a running direction of the continuous fiber group.

2. The process for producing a spunbonded nonwoven fabric (10) according to claim 1, wherein the minute-deformation means (5) is disposed at an interval of 10 to 200 mm along the long-side direction of the slit width regulation member.

3. The process for producing a spunbonded nonwoven fabric (10) according to any one of claims 1 to 2, wherein the basis-weight distribution of the nonwoven fabric (10) in a width direction, the nonwoven fabric having been collected, is determined on-line and the determined value thereof is fed back to automatically control a slit gap (8) of the rectangular ejector (3).

4. An apparatus for producing a spunbonded nonwoven fabric (10), comprising at least a spinneret (1), a rectangular ejector (3), and a collecting conveyor (9), wherein the rectangular ejector (3) has a jetting hole part having a pair of slit width regulation parts which faces each other and extends continuously along a long-side direction of the jetting hole, at least one of the slit width regulation parts being a slit width regulation member which is composed of an integrated member extending continuously along the long-side direction of the jetting hole, and a plurality of minute-deformation means (5) which minutely deform the slit width regulation member is disposed along a long-side direction of the slit width regulation member, wherein the pair of slit width regulation parts has a length (6) of 10 mm or larger along a running direction of a continuous fiber group.

5. The apparatus for producing a spunbonded nonwoven fabric (10) according to claim 4, further comprising an on-line basis weight meter (11).

**Patentansprüche**

1. Verfahren zur Herstellung eines Spinnvliesstoffs (10) durch Einspinnen einer kontinuierlichen Fasergruppe (2) aus einer Spinndüse (1), Ausdünnen und Strecken der kontinuierlichen Fasergruppe mit einem rechteckigen Ejektor (3) und Entnehmen der kontinuierlichen Fasergruppe (2) in Form eines Vliesstoffs, wobei der rechteckige Ejektor (3) ein Ausstoßlochteil mit einem Paar von Spaltbreitenregulierungsteilen aufweist, die einander zugewandt sind und sich kontinuierlich entlang einer Längsseitenrichtung des Ausstoßlochs erstrecken, wobei zumindest eines der Spaltbreitenregulierungsteile ein Spaltbreitenregulierungselement ist, das aus einem integrierten Element besteht, das sich kontinuierlich entlang der Längsseitenrichtung des Ausstoßlochs erstreckt, eine Vielzahl von Mitteln zur geringfügigen Verformung (5), die das Spaltbreitenregulierungselement geringfügig verformen, entlang einer Längsseitenrichtung des Spaltbreitenregulierungselements angeordnet sind und ein Vliesstoff (10), der entnommen wurde, untersucht wird, um eine Flächengewichtsverteilung davon in einer Breitenrichtung zu bestimmen, und das Spaltbreitenregulierungselement durch das Mittel zur geringfügigen Verformung (5) auf Basis eines bestimmten Werts davon teilweise und geringfügig verformt wird, um eine Spaltbreite des Ausstoßlochs durch seine geringfügige Verformung teilweise zu ändern, wodurch eine Flächengewichtsverteilung davon reguliert wird, wobei das Paar von Spaltbreitenregulierungsteilen entlang einer Laufrichtung der kontinuierlichen Fasergruppe eine Länge (6) von 10 mm oder größer aufweist.

2. Verfahren zur Herstellung eines Spinnvliesstoffs (10) nach Anspruch 1, wobei das Mittel zur geringfügigen Verformung (5) in einem Abstand von 10 bis 200 mm entlang der Längsseitenrichtung des Spaltbreitenregulierungselements angeordnet ist.

3. Verfahren zur Herstellung eines Spinnvliesstoffs (10) nach einem der Ansprüche 1 bis 2, wobei die Flächengewichtsverteilung des Vliesstoffs (10) in einer Breitenrichtung, nachdem der Vliesstoff entnommen worden ist, on-line bestimmt wird und der bestimmte Wert davon rückgemeldet wird, um eine Spaltlücke (8) des rechteckigen Ejektors (3) automatisch zu steuern.

**4.** Vorrichtung zur Herstellung eines Spinnvliesstoffs (10), umfassend zumindest eine Spinndüse (1), einen rechteckigen Ejektor (3) und eine Entnahmefördervorrichtung (9), wobei der rechteckige Ejektor (3) ein Ausstoßlochteil mit einem Paar von Spaltbreitenregulierungsteilen aufweist, die einander zugewandt sind und sich kontinuierlich entlang einer Längsseitenrichtung des Ausstoßlochs erstrecken, wobei zumindest eines der Spaltbreitenregulierungsteile ein Spaltbreitenregulierungselement ist, das aus einem integrierten Element besteht, das sich kontinuierlich entlang der Längsseitenrichtung des Ausstoßlochs erstreckt, und eine Vielzahl von Mitteln zur geringfügigen Verformung (5), die das Spaltbreitenregulierungselement geringfügig verformen, entlang einer Längsseitenrichtung des Spaltbreitenregulierungselements angeordnet sind,
wobei das Paar von Spaltbreitenregulierungsteilen entlang einer Laufrichtung einer kontinuierlichen Fasergruppe eine Länge (6) von 10 mm oder größer aufweist.

**5.** Vorrichtung zur Herstellung eines Spinnvliesstoffs (10) nach Anspruch 4, ferner umfassend ein On-line-Flächengewichtsmessgerät (11).

**Revendications**

**1.** Procédé de production d'un tissu non tissé filé-lié (10) par éjection d'un groupe de fibres continues (2) à partir d'une filière (1), amincissement et l'étirage du groupe de fibres continues avec un éjecteur rectangulaire (3), et collecte du groupe de fibres continues (2) sous la forme d'un tissu non tissé, dans lequel l'éjecteur rectangulaire (3) possède une partie d'orifice d'éjection ayant une paire de parties de régulation de largeur de fente qui se font face mutuellement et s'étend de façon continue le long d'une direction de côté long de l'orifice d'éjection, au moins une des parties de régulation de largeur de fente étant un élément de régulation de largeur de fente qui est composé d'un élément intégré s'étendant en continu le long de la direction de côté long de l'orifice d'éjection, une pluralité de moyens de déformation minutieuse (5) qui déforment minutieusement l'élément de régulation de largeur de fente est disposée le long d'une direction de côté long de l'élément de régulation de largeur de fente, et un tissu non tissé (10) qui a été collecté est examiné pour déterminer une répartition de poids de base de celui-ci dans une direction de largeur et l'élément de régulation de largeur de fente est en partie et minutieusement déformé par les moyens de déformation minutieuse (5) sur la base d'une valeur déterminée de celle-ci pour changer partiellement une largeur de fente de l'orifice d'éjection par sa déformation minutieuse, en régulant ainsi une répartition de poids de base de celui-ci,
dans lequel la paire de parties de régulation de largeur de fente a une longueur (6) de 10 mm ou plus le long d'une direction de défilement du groupe de fibres continues.

**2.** Procédé de production d'un tissu non tissé filé-lié selon la revendication 1, dans lequel les moyens de déformation minutieuse sont disposé à un intervalle de 10 à 200 mm le long de la direction de côté long de l'élément de régulation de largeur de fente.

**3.** Procédé de production d'un tissu non tissé filé-lié (10) selon l'une quelconque des revendications 1 à 2, dans lequel la répartition de poids de base du tissu non tissé (10) dans une direction de largeur, le tissu non tissé ayant été collecté, est déterminée en ligne et la valeur déterminée de celle-ci est alimentée en arrière pour commander automatiquement un espace de fente (8) de l'éjecteur rectangulaire.

**4.** Appareil pour produire un tissu non tissé filé-lié (10), comprenant au moins une filière (1), un éjecteur rectangulaire (3), et un convoyeur de collecte (9), dans lequel l'éjecteur rectangulaire (3) comporte une partie d'orifice d'éjection ayant une paire de parties de régulation de largeur de fente qui se font face mutuellement et s'étend de façon continue le long d'une direction de côté long de l'orifice d'éjection, au moins une des parties de régulation de largeur de fente étant un élément de régulation de largeur de fente qui est composé d'un élément intégré s'étendant de façon continue le long de la direction de côté long de l'orifice d'éjection, et une pluralité de moyens de déformation minutieuse (5) qui déforment de manière minutieuse l'élément de régulation de largeur de fente est disposée le long d'une direction de côté long de l'élément de régulation de largeur de fente,
dans lequel la paire de parties de parties de régulation de largeur de fente a une longueur (6) de 10 mm ou plus le long d'une direction de défilement d'un groupe de fibres continues.

**5.** Appareil pour produire un tissu non tissé filé-lié selon la revendication 4, comprenant en outre un dispositif de mesure de poids de base en ligne.

FIG. 1

**EP 3 346 037 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05186953 A
- JP H05195403 A
- JP H07316966 A
- JP H09228223 A
- US 5487655 A